# FASCICULE DE BREVET EUROPEEN

(11) **EP 2 346 703 B1**
(45) Date de publication et mention de la délivrance du brevet: **12.12.2012**
(21) Numéro de dépôt: 09783930.2
(22) Date de dépôt: 12.10.2009
(51) Int. Cl.: B60C 19/08, B29D 30/06

(54) **PNEUMATIQUE COMPORTANT UN FIL CONDUCTEUR TRAVERSANT DES NAPPES DE RENFORT SOMMET NON CONDUCTRICES DE L'ELECTRICITE ET PROCEDE ASSOCIE**
REIFEN MIT EINEM DURCH ELEKTRISCH NICHT LEITENDE GÜRTELVERSTÄRKUNGSLAGEN HINDURCHGEFÜHRTEN LEITUNGSDRAHT UND ZUGEHÖRIGES VERFAHREN
TYRE COMPRISING A CONDUCTING WIRE PASSING THROUGH ELECTRICALLY NONCONDUCTING CROWN-REINFORCING PLIES AND ASSOCIATED METHOD

(30) Priorité: 17.10.2008 FR 0857073
(43) Date de publication de la demande: 27.07.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: HINC, Henri, F-63540 Romagnat (FR); DETTORRE, Jean-Marie, F-63000 Clermont-Ferrand (FR)
(74) Mandataire: Reynaud, Georges
(86) Numéro de dépôt international: PCT/EP2009/063243
(87) Numéro de publication internationale: WO 2010/043577

(56) Documents cités:
- CH-A5- 597 008
- FR-A- 1 198 271
- FR-A- 2 759 946

## Description

Le domaine de l'invention concerne les pneumatiques destinés à être montés sur des véhicules de transport. Plus spécifiquement, l'invention traite du problème de l'écoulement des charges électriques dans des pneumatiques réalisés avec des mélanges caoutchouteux non conducteurs de l'électricité.

Dans le but d'améliorer la résistance au roulement et de réduire la consommation de carburant, les pneumatiques modernes comportent des mélanges caoutchouteux comprenant à titre de charge majoritaire des charges non conductrices de l'électricité, telles que la silice, qui sont utilisés par exemple pour la réalisation des bandes de roulement. Un pneumatique de ce type est décrit, à titre illustratif, dans la publication EP 0 501 227.

En raison de la très grande résistivité de ces mélanges, leur mise en oeuvre a été accompagnée par le développement de multiples solutions techniques pour éviter l'accumulation d'électricité statique, et permettre l'écoulement des charges vers le sol lors du roulage du véhicule. Les inconvénients liés à l'accumulation de charges électriques sont bien connus des équipementiers, et sont de natures aussi diverses que la perturbation du fonctionnement de la radio embarquée dans le véhicule, les chocs électriques de l'occupant lors de sa descente du véhicule, ou encore le vieillissement accéléré du pneumatique en raison de la formation d'ozone.

Aussi, les fabricants de pneumatiques s'attachent à mettre sur le marché des pneumatiques ne présentant pas ces inconvénients. La publication US 5 518 055 décrit un pneumatique dont la bande de roulement, réalisée à partir d'un mélange non conducteur, est enduite d'une fine couche de mélange conducteur. Cette couche est en contact avec les mélanges de flanc, eux-mêmes également conducteurs de l'électricité, afin de permettre l'écoulement des charges électriques.

Une autre solution, exposée dans la publication EP 0 658 452, consiste à placer un insert dans la bande de roulement. Cet insert, qui s'étend radialement, préférentiellement sur toute la circonférence du pneumatique, est réalisé avec un mélange caoutchouteux conducteur de l'électricité, et relie la surface externe de la bande de roulement soit à l'une des nappes de renfort sommet, chacune de ces nappes étant conductrices de l'électricité, soit à tout autre partie attenante à la bande de roulement du pneumatique et suffisamment conductrice d'électricité, De nombreux perfectionnements ont été apportés à ce principe, selon que la bande de roulement comporte une ou plusieurs couches de matériaux conducteurs ou non conducteurs, et sont exposés à titre d'exemple dans les publications EP 0 925 903 ou EP 0 963 302.

Toutes ces méthodes ont pour objet de relier la surface externe de la bande de roulement avec une partie de la zone interne du sommet du pneumatique qui lui est juste adjacente, telle que le flanc, une nappe de renfort sommet ou de renfort carcasse, et qui présente des propriétés de conduction de l'électricité.

Toutefois, les développements récents des pneumatiques, toujours dans le but d'améliorer la résistance au roulement, conduisent à généraliser l'utilisation des mélanges faiblement conducteurs de l'électricité, à base de silice, dans la plupart des composants du pneumatique susceptibles d'effectuer un travail mécanique pendant la phase de roulage dudit pneumatique. Ainsi, en plus des bandes de roulement, on utilise de tels mélanges pour la réalisation des nappes d'armature sommet.

On entend par matériau caoutchouteux faiblement conducteur de l'électricité, un matériau à base de caoutchouc présentant une résistivité supérieure ou égale à 10⁸ Ohms/cm. De même, on entend par matériau caoutchouteux conducteur de l'électricité, un matériau à base de caoutchouc présentant une résistivité inférieure à 10⁶ Ohms/cm.

L'invention a pour objet de fournir un moyen à la conduction des charges électriques entre la partie radialement externe et la partie radialement interne d'une ceinture sommet du type ci-dessus.

L'invention a également pour objet un procédé de fabrication d' un pneumatique conforme à l'invention.

Ainsi, l'invention concerne un pneumatique selon la revendication 1, ledit pneumatique étant destiné à être monté sur une roue, et spécialement conçu pour réduire la résistance au roulement. Ledit pneumatique comprend à titre indicatif :
- Une bande de roulement dont la surface radialement externe est destinée à être en contact avec le sol. Ladite bande de roulement est, en règle générale, composée d'un mélange faiblement conducteur de l'électricité et comporte un moyen permettant d'assurer la conduction de l'électricité, tel que décrit par exemple dans la publication EP 0 658 452.
- Une ceinture de renfort sommet, formée d'une pluralité de nappes de renforts superposées les unes sur les autres. Chaque nappe de renfort comprend des fils, parallèles entre eux, enrobés dans un mélange caoutchouteux faiblement conducteur de l'électricité, et faisant un angle donné avec ladite direction circonférentielle. Les nappes de renfort peuvent résulter de l'enroulement de plusieurs tronçons de nappes disposés les uns sur les autres ou de la dépose des fils directement sur la surface de réception.
- La ceinture de renfort sommet est en contact avec la surface radialement interne de la bande de roulement, et plus particulièrement avec le moyen permettant d'assurer la conduction de l'électricité disposé dans la bande de roulement.
- Une zone talon, destinée à assurer un contact étroit entre la roue et le pneumatique, comprenant des anneaux de renfort des bourrelets et, des gommes de protection talon en contact avec la roue, lesdites gommes de protection talon étant formées, en règle générale, à partir d'un mélange caoutchouteux conducteur de l'électricité.
- Une ou plusieurs nappes de renfort carcasse, superposées les unes sur les autres, ancrées par leurs extrémités radialement internes sur les anneaux de renfort des bourrelets, et comprenant également des fils enrobés dans un mélange caoutchouteux conducteur de l'électricité. Les fils sont parallèles entre eux et font un angle donné, généralement de 90°, avec la direction circonférentielle. En son centre, la nappe de renfort carcasse est en contact avec la nappe radialement interne de la ceinture de renfort sommet.
- Une zone flanc, destinée à assurer la protection de la nappe de renfort carcasse, et formée, en règle générale, à partir d'un mélange caoutchouteux faiblement conducteur de l'électricité.

Le terme fil doit être compris dans un sens tout à fait général, englobant un mono filament, un multi filament, un câblé ou un retors ou un assemblage équivalent, et ceci, quelle que soit la matière textile ou métallique constituant le fil, ou le traitement qu'il pourrait subir, par exemple un gommage ou un traitement de surface, pour favoriser sa liaison intime avec du caoutchouc.

Ce pneumatique se caractérise en ce qu'un brin de fil conducteur de l'électricité traverse la ceinture de part en part en un point donné, et en ce que une première extrémité libre dudit brin de fil conducteur de l'électricité circule sur la face radialement externe de ladite ceinture de renfort sommet et que la seconde extrémité libre dudit brin circule sur la face radialement interne de ladite ceinture de renfort sommet.

Il suffit alors de mettre en contact la première extrémité libre du dit tronçon avec la surface interne de la bande de roulement. Si cette dernière est également formée d'un matériaux faiblement conducteur de l'électricité il conviendra alors, de manière connue, de prévoir des moyens pour assurer la conduction de l'électricité entre la surface extérieure de la bande de roulement destinée à être en contact avec le sol, et la partie radialement interne de la bande de roulement et d'assurer la mise en contact de ce moyen, tel qu'un insert, avec la première extrémité libre dudit brin de fil conducteur circulant sur la surface radialement externe de la ceinture sommet.

De même, la seconde extrémité libre du brin de fil est en contact avec la surface radialement externe de la nappe de renfort carcasse. Si cette dernière est formée d'un matériau caoutchouteux faiblement conducteur de l'électricité, il convient là encore de prévoir, de manière connue, des moyens de conduction de l'électricité depuis la face radialement supérieure de la partie centrale de la nappe de renfort carcasse jusqu'aux faces internes des gommes de renfort talon, et de placer ladite seconde extrémité libre dudit brin de fil conducteur de l'électricité de telle sorte qu'elle soit en contact avec les dits moyens disposés sur la nappe de renfort carcasse.

De cette manière, on assure la conduction des charges électriques depuis la surface extérieure de la bande de roulement en contact avec le sol, jusqu'à la jante de la roue.

Un dispositif destiné à réaliser un pneumatique du type de celui décrit dans les paragraphes précédents a pour fonction de transpercer la nappe de renfort sommet afin de disposer un brin de fil conducteur de l'électricité tel que décrit précédemment. Ce dispositif comprend :
- une surface de réception rotative destinée à recevoir lesdites nappes de renfort, ladite surface de réception comportant un orifice,
- un moyen de stockage et d'acheminement d'un fil continu,
- une aiguille creuse dans laquelle circule ledit fil, apte à se déplacer dans la direction radiale à travers l'orifice de la surface de réception, et un moyen de coupe, disposés du coté d'une première face radiale de la surface de réception, et

Le dispositif peut comporter également un moyen apte à retenir le fil, disposé du coté d'une seconde face radiale de la surface de réception et opposée à ladite première face radiale.

La surface de réception comprend deux faces. L'une est disposée radialement à l'extérieur et correspond à la surface sur laquelle on dépose par enroulement les nappes de renfort constituant la ceinture de renfort. Cette face comprend par extension la face radialement externe de la ceinture de renfort. L'autre face de la surface de réception correspond à la face radialement interne de la surface de réception. On entend par première face radiale la face interne ou externe de la surface de réception du coté de laquelle sont disposés l'aiguille creuse et son mécanisme de translation et le moyen de coupe. Par symétrie, on entend par seconde face radiale la face respectivement externe ou interne du coté de laquelle est situé le moyen apte à retenir le fil.

Il en découle que le perçage de la nappe de renfort peut se faire en traversant la nappe radialement depuis la face radialement externe vers la face radialement interne ou inversement depuis la face radialement interne vers la face radialement externe.

Le procédé de fabrication d'un pneumatique selon l'invention comprend les étapes au cours desquelles :
- on dépose une ou plusieurs nappes de renfort sur ladite surface de réception,
- on approche de ladite première face radiale la pointe de l'aiguille creuse de laquelle a été préalablement extrait une amorce de longueur λ donnée,
- en passant par l'orifice de la surface de réception, on transperce la ceinture sommet de part en part en déplaçant radialement ladite aiguille creuse, de la première face radiale vers la seconde face radiale, de sorte que ladite amorce soit disposée du coté de ladite seconde face radiale,
- on retire l'aiguille en effectuant un mouvement dans la direction opposée au mouvement de l'étape précédente, tout en faisant circuler le fil à l'intérieur de ladite aiguille, jusqu'à ce que la longueur de fil comprise entre la pointe de l'aiguille creuse et la première face radiale soit sensiblement égale à une longueur prédéterminée,
- on tranche, la portion de fil comprise entre la pointe de l'aiguille creuse et la première face radiale en activant le moyen de coupe.

Lorsque le dispositif comporte des moyens aptes à retenir le fil, on active les dits moyens avant de retirer l'aiguille de manière à maintenir le fil du coté de la seconde face radiale, et on enserre l'extrémité du dit fil disposée du coté de la seconde face radiale pendant tout le mouvement de l'aiguille. On désactive lesdits moyens après la coupe, de manière à libérer l'amorce, de sorte que les deux extrémités libres du brin de fil conducteur de l'électricité ainsi constitué soient disposées respectivement radialement de part et d'autre de la ceinture de renfort.

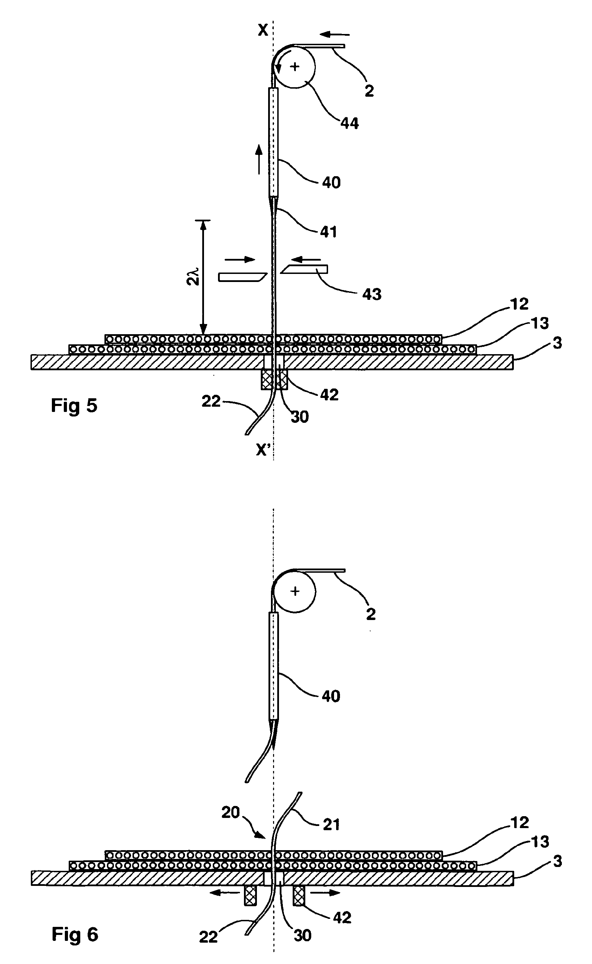

La description qui suit permet de mieux comprendre l'invention, et s'appuie sur des exemples particuliers de réalisation, et sur les figures 1 à 7 dans lesquelles :
- la figure 1 représente une coupe de pneumatique conforme à l'invention,
- les figures 2, 3, 4, 5 et 6 représentent les principales étapes de mise en oeuvre d'un dispositif de perçage selon une première forme de réalisation de l'invention,
- les figures 7, 8, 9, 10 et 11 représentent les principales étapes de mise en oeuvre d'un dispositif de perçage selon une seconde forme de réalisation,

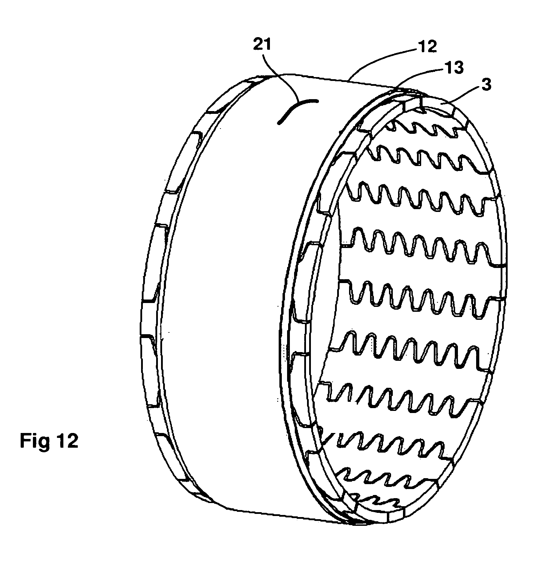

- la figure 12 représente une vue schématique en perspective d'un exemple de surface de réception sur laquelle a été déposée une ceinture de renfort sommet traversée par un brin de fil conducteur.

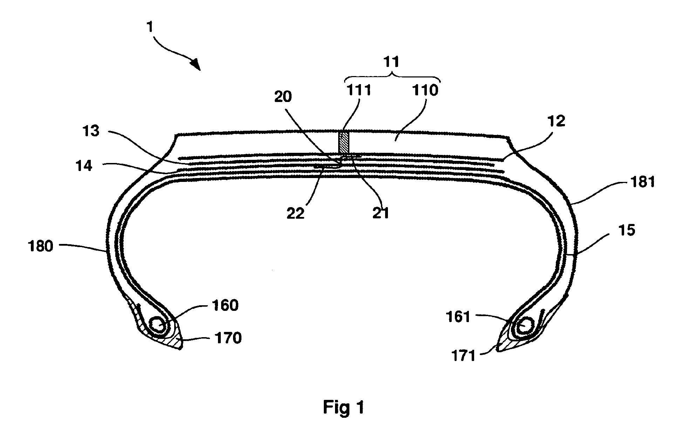

Le pneumatique 1, représenté à la figure 1, comporte une bande de roulement 11, qui comprend des moyens 110, 111, 12, pour assurer la conduction de l'électricité entre la surface extérieure de la bande de roulement destinée à être en contact avec le sol, et la partie radialement interne de ladite bande de roulement.

Ces moyens peuvent consister à prévoir une bande de roulement réalisée avec un matériau caoutchouteux conducteur de l'électricité ou, préférentiellement, à réaliser une bande de roulement 11 formée à partir d'un mélange faiblement conducteur de l'électricité 110 et comprenant un insert 111 traversant radialement la bande de roulement. La bande de roulement 11 peut comprendre également une sous-couche 12, elle-même formée à partir d'un mélange conducteur de l'électricité ou comprenant un moyen d'écoulement des charges semblable à celui de la bande de roulement.

La ceinture de renfort sommet figurant sur la coupe de pneumatique servant de base à la présente description est composée de deux nappes de renfort 13 et 14 dont les fils forment un angle donné avec la direction circonférentielle du pneumatique. Un brin de fil conducteur 20 traverse la ceinture sommet de part en part en un point donné, de telle sorte qu'une première extrémité libre 21 du brin 20 circule sur la face radialement externe de la ceinture sommet et que la seconde extrémité libre 22 du brin 20 circule sur la face interne de la ceinture sommet. Cet exemple de mise en oeuvre n'est bien sur pas limitatif et la ceinture sommet peut se composer de plusieurs nappes non conductrices et comprendre des nappes croisées ou des nappes formées par enroulement d'une bande ou d'un fil faisant un angle nul avec la direction circonférentielle dites nappes ou bandes à zéro degré.

La nappe de renfort carcasse 15 est ancrée par ses deux extrémités radialement inférieure sur des anneaux de renfort talon 160 et 161. La nappe de renfort carcasse peut être constituée de fils enrobés dans un mélange conducteur de l'électricité ; ou, si tel n'est pas le cas comporter des moyens pour assurer la conduction de l'électricité depuis la surface radialement externe de ladite nappe de renfort carcasse jusqu'aux gommes de protection talon. La partie centrale de ladite nappe de renfort carcasse 15 est en contact avec la face radialement interne de ladite ceinture de renfort sommet. On s'arrange alors pour que la seconde extrémité libre 22 du brin de fil conducteur 20 soit en contact avec lesdits moyens.

Les gommes de protection talon 170 et 171, destinées à assurer le contact entre les talons du pneumatique et la jante de la roue sont en contact avec la nappe de renfort carcasse 15, et comportent un moyen permettant de conduire l'électricité depuis la partie interne jusqu'à la partie externe en contact avec la jante de la roue. Préférentiellement ces gommes de protection talon 170 et 171 sont réalisées avec un mélange de caoutchouc conducteur de l'électricité.

Enfin, le pneumatique 1, comprend des gommes de protection des flancs, 180 et 181. La nature du mélange caoutchouteux, conducteur ou non de l'électricité, constituant ces gommes de protection est indifférent dans le cadre de la présente description, mais peut éventuellement participer à l'écoulement des charges électriques dans le cas d'un pneumatique réalisé selon une construction différente.

Les charges électriques s'écoulent successivement par :
- la bande de roulement 11 qui comprend des moyens 111, 12 permettant d'établir un chemin conducteur de l'électricité entre la partie radialement externe de la bande de roulement destinée à être en contact avec le sol et la partie radialement interne 12 de ladite bande de roulement 11,
- la première extrémité libre 21 du brin de fil conducteur 20 qui est en contact avec la sous-couche 12, le brin de fil conducteur 20, et la deuxième extrémité libre dudit brin qui est en contact avec la nappe de renfort carcasse
- la nappe de renfort carcasse qui est en contact avec les gommes de protection talon 170, 171, ces dernières étant destinées à établir un contact avec la jante de la roue.

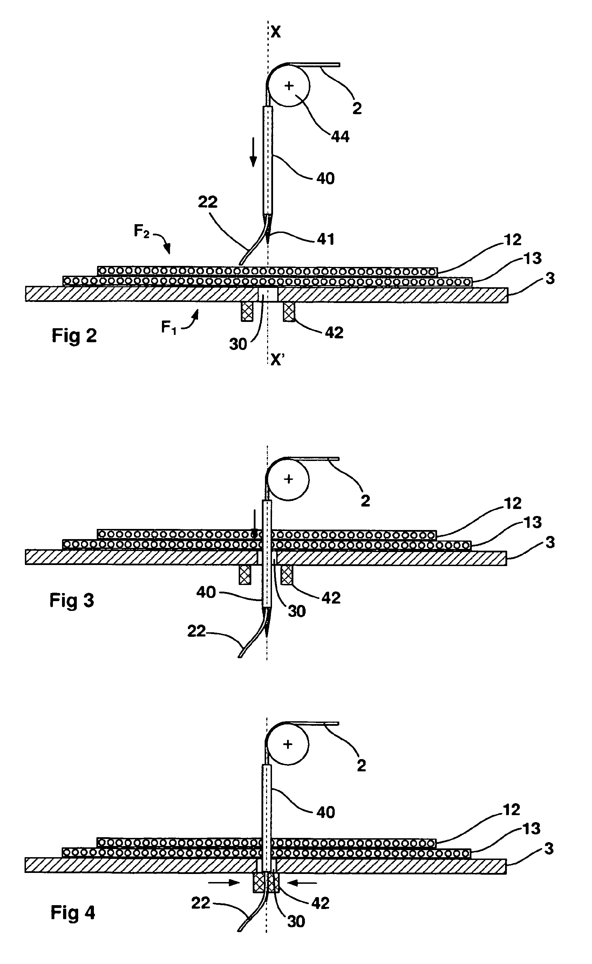

La figure 2 représente un dispositif de perçage conforme à l'invention, et apte à disposer un brin de fil 20 conducteur de l'électricité de part et d'autre de la ceinture de renfort sommet.

La surface de réception 3 est représentée de façon schématique. Les nappes de renfort 12 et 13 sont déposées sur la partie radialement externe de la surface de réception 3. Un orifice 30, traverse de part en part la surface de réception 3.

Un fil continu 2 provenant d'un moyen de stockage et d'acheminement (non représenté) circule autour d'une poulie 44 et pénètre dans le canal intérieur d'une aiguille creuse 40 disposée dans la direction radiale XX', et dont la pointe radialement inférieure 41 est effilée. Aussi, du fait de la position de l'aiguille creuse 40, la première face radiale F₁ est constituée, dans le cas de cet exemple de mise en oeuvre, par la face radialement externe de la surface de réception 3 sur laquelle repose la ceinture sommet (12, 13).

Une amorce de fil 22 dépasse de la partie radialement inférieure de l'aiguille creuse 41.

Des tampons de pressage 42 sont situés du coté de la deuxième face radiale F₂ de la surface de réception 3. Ces tampons se déplacent de manière antagoniste, parallèlement à un plan perpendiculaire à la direction radiale XX'. En position ouverte comme cela est illustré à la figure 3 ils autorisent le passage de l'aiguille creuse 40 au travers de l'orifice 30. En position fermée comme cela est illustré à la figure 4, ils enserrent la pointe de l'aiguille 42 et l'amorce du fil 22 de manière à maintenir ladite amorce du coté de la deuxième face radiale, et à empêcher ainsi le fil de remonter au travers de l'orifice 30. Il est possible de substituer tout autre moyen aux tampons de pressage qui illustrent ici une forme simplifiée d'un moyen apte à retenir le fil.

La figure 2 illustre la première étape de mise en oeuvre du dispositif au cours de laquelle on plonge l'aiguille creuse 40 au travers de la ceinture de renfort sommet en passant par l'orifice 30 de la surface de réception 3. L'aiguille creuse effectue un mouvement radial dans la direction XX', selon un sens orienté depuis la première face radiale F₁ vers la seconde face radiale F₂ soit, dans le cas d'espèce, depuis la face radialement externe de la surface de réception vers la face radialement interne de la surface de réception 3. La course de l'aiguille creuse 40 est ajustée de telle sorte que, au cours de ce mouvement descendant l'ensemble de l'amorce passe de l'autre coté de la seconde face radiale F₂.

L'aiguille creuse effectue alors un mouvement dans le sens opposé au précédent, jusqu'à ce que la pointe 41 de l'aiguille soit disposée au droit des tampons de serrage 42. On referme alors les tampons 42 de manière à presser l'amorce 22 du fil et à la retenir du coté de la seconde face radiale F₂, comme cela est illustré à la figure 4.

On observera à ce stade que la surface de réception est formée par la partie radialement externe d'un moyen mécanique tel qu'un cylindre, dont l'épaisseur est non nulle. Aussi, l'orifice 30 qui traverse la surface de réception pour permettre le passage de l'aiguille creuse 40 peut avoir une certaine longueur dans la direction radiale. Il s'en suit que, la course radiale de l'aiguille creuse et la longueur de l'amorce 22 devront être adaptées à la position des tampons de pressage 42 de manière à ce que ladite amorce puisse être saisie aisément par lesdits tampons de pressage 42. On s'arrangera pour que les dits tampons de pressage soient disposés au plus près de la surface de réception.

La surface de réception peut également être formée par la surface d'un cylindre plein ou d'un tube cylindrique dont l'épaisseur serait inappropriée. Dans ce cas particulier, la mise en oeuvre de l'invention nécessiterait de réaliser un logement sous la surface de réception pour y installer l'aiguille creuse et le moyen de coupe, dans le cas où la face radialement interne est considérée comme la première face radiale F₁, ou le moyen apte à retenir le fil dans le cas où la face radialement interne est considérée comme la deuxième face radiale F₂.

Une fois l'amorce 22 enserrée par les presseurs 42, le fil est bloqué dans le sens allant de la face radiale inférieure F₂ vers la face radiale supérieure F₁.

En poursuivant le mouvement de retour de l'aiguille, on provoque la circulation du fil à l'intérieur de l'aiguille creuse et l'activation des moyens d'acheminent du fil représenté ici par la mise en rotation du rouleau 44. On libère ainsi une certaine quantité de fil d'une longueur prédéterminée, entre la pointe 41 de l'aiguille 40 et la surface de réception. On s'arrange pour que cette quantité soit sensiblement égale à deux fois la longueur λ de l'amorce 22.

On actionne alors les moyens de coupe 43 pour sectionner le fil 2, et former un brin de fil 20. En sectionnant le fil à la mi hauteur, c'est à dire à une distance λ de la pointe 41 en direction de la surface de réception, il est possible de préparer l'amorce de fil servant à l'opération de perçage suivante.

Le brin de fil conducteur de l'électricité obtenu 20 comprend alors une première extrémité libre 21 disposée du coté de la face radialement externe de la ceinture de renfort, et une seconde extrémité libre 22 disposée du coté de la face radialement interne de la ceinture de renfort. Lors de pose de la ceinture de renfort sur la nappe de renfort carcasse, l'extrémité libre 22 du brin de fil conducteur 20, sera mise en contact avec la face radialement externe de la nappe de renfort carcasse, et lors de la pose de la bande de roulement, l'extrémité libre 21 du brin de fil conducteur 20, sera mise en contact avec la face radialement interne de ladite bande de roulement, de manière à réaliser un pneumatique conforme à l'invention tel que représenté à la figure 1.

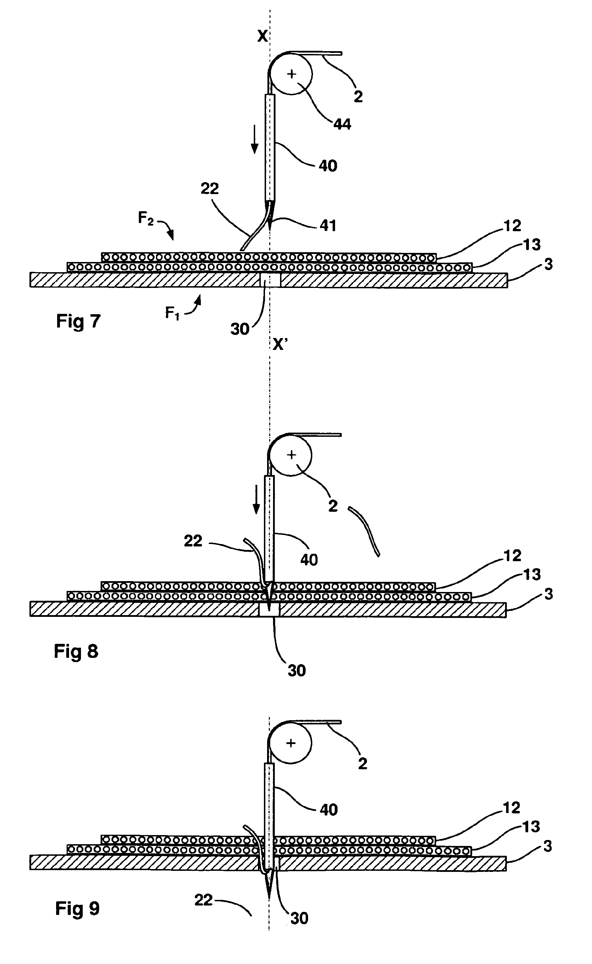

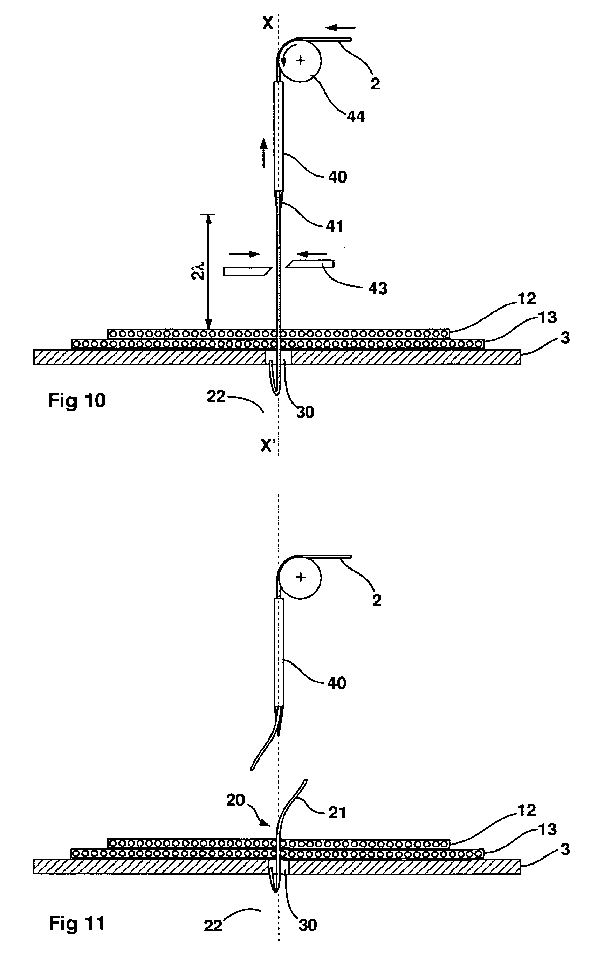

Les figures 7 à 11 illustrent les principales étapes de mise en oeuvre d'un dispositif selon une seconde forme de réalisation de l'invention permettant de réaliser des pneumatiques conformes à l'invention. Le dispositif en question est une forme simplifiée du dispositif décrit dans les paragraphes précédents. Selon cette forme de réalisation, le dispositif ne comporte pas de moyens aptes à retenir le fil du coté de la seconde face radiale.

Il a été observé que le matériau caoutchouteux formant certaines nappes disposaient d'une élasticité et d'un collant suffisant pour retenir le fil sortant de l'aiguille, lorsque ladite aiguille creuse 40 effectuait le mouvement retour allant de la face radiale inférieure F₂ vers la face radiale supérieure F₁. Le fil est enserré par le caoutchouc au moment précis où la pointe 41 de l'aiguille creuse 40 ressort de la nappe, et où le fil se retrouve en contact avec les lèvres du trou réalisé par l'aiguille 40.

La séquence des mouvements de l'aiguille et du fil est sensiblement la même que celle décrite précédemment, et s'en distingue en ce que les étapes dans lesquelles on active, ou on désactive, le moyen apte à retenir le fil sont exclues.

L'aiguille creuse 40 peut transpercer la ceinture sommet en un point quelconque de sa surface de la ceinture de renfort. On choisira néanmoins un point de la surface de la ceinture pour lequel les deux extrémités libres 21 et 22 du brin de fil conducteur 20 pourront être en contact avec les parties conductrices situées radialement au dessus et au dessous de la ceinture de renfort.

La longueur du brin de fil doit être suffisante pour pouvoir assurer un contact électrique avec la partie radialement interne de la bande de roulement et la partie radialement externe de la nappe de renfort carcasse. En pratique, un brin d'une longueur comprise entre 30 mm et 50 mm, permet de faire face à l'ensemble des contraintes dimensionnelles. A titre indicatif, une longueur de 50mm a permis de réaliser la plupart des dimensions destinées à l'équipement des véhicules tourisme.

De même il a été observé que le fil se recourbe et se plie autour de la pointe de l'aiguille lorsque l'aiguille pénètre dans le matériau caoutchoutique. Ceci a pour effet, en particulier lorsque le fil conducteur choisi est un fil métallique d'orienter la direction de l'extrémité du fil en direction de la surface de la ceinture sommet. Comme cela est représenté dans les figures 8, 9, 10 et 11.

Cette orientation particulière permet de faciliter l'accrochage du fil par ancrage de l'extrémité du fil formant en quelque sorte un hameçon dans la surface radialement interne du sommet, de manière à éviter la remontée du fil lors de la remontée de l'aiguille creuse.

Le fil conducteur 20, peut être un fil de nature métallique enrobé ou non d'un mélange de caoutchouc conducteur de l'électricité. Il est également envisageable de choisir un fil de nature textile enrobé dans un mélange conducteur de l'électricité.

De préférence on choisira un fil ayant des propriétés élastiques suffisantes de manière à ne pas brider localement l'expansion radiale ou circonférentielle de la ceinture de renfort sommet au cours des opérations ultérieures de fabrication ou pendant l'usage du pneumatique.

A cet effet, et pour limiter le bridage dont il est question ci-dessus, il est préférable d'implanter le fil dans la zone centrale du pneumatique, c'est-à-dire proche de l'équateur, à un endroit où les déformations du pneumatique sont faibles. On entend par proche, une zone circonférentielle dont la largeur est sensiblement égale à la demi largeur du pneumatique et s'étendant symétriquement de part et d'autre de l'équateur.

La figure 7 représente un exemple de mise en oeuvre de l'invention dans lequel la ceinture sommet est disposée sur une forme de finition sommet 3 sur la face radiale externe de laquelle circule l'extrémité libre 21 d'un brin de fil conducteur de l'électricité.

## Revendications

1. Pneumatique (1) comportant une ceinture de renfort sommet, formée d'une pluralité de nappes de renforts (13, 14) superposées les unes sur les autres, **caractérisé en ce que** chaque nappe de renfort comprend des fils, parallèles entre eux, enrobés dans un mélange caoutchouteux faiblement conducteur de l'électricité présentant une résistivité électrique supérieure ou égale à 108 Ohms/cm, et faisant un angle donné avec ladite direction circonférentielle, un brin de fil conducteur de l'électricité (20) traverse la ceinture de part en part suivant la direction radiale, et **en ce qu'**une première extrémité libre (21) dudit brin circule sur la face radialement externe de ladite ceinture et que la seconde extrémité libre dudit brin (22) circule sur la face radialement interne de ladite ceinture de renfort.

2. Pneumatique selon la revendication 1, dans lequel le brin de fil conducteur de l'électricité (20) est un fil textile gainé à l'aide d'un mélange conducteur de l'électricité présentant une résistivité inférieure à 10⁶ Ohms/cm.

3. Pneumatique selon la revendication 1, dans lequel le brin de fil conducteur de l'électricité (20) est un fil métallique gainé à l'aide d'un mélange conducteur de l'électricité présentant une résistivité inférieure à 10⁶ Ohms/cm.

4. Pneumatique selon l'une des revendications 1 à 3, dans lequel le brin de fil conducteur de l'électricité (20) a une longueur comprise entre 30mm et 100mm.

5. Pneumatique selon l'une des revendications 1 à 4 dans lequel le brin de fil conducteur de l'électricité (20) est implanté dans une zone circonférentielle dont la largeur est sensiblement égale à la demi largeur du pneumatique et s'étendant symétriquement de part et d'autre de l'équateur dudit pneumatique.

6. Pneumatique (1) selon l'une des revendication 1 à 5, comprenant en outre une bande de roulement (11) formée d'un matériau caoutchouteux (110) faiblement conducteur de l'électricité présentant une résistivité électrique supérieure ou égale à 10⁸ Ohms/cm, dans laquelle sont prévus des moyens (111, 12) pour assurer la conduction de l'électricité entre la surface extérieure de la bande de roulement destinée à être en contact avec le sol, et la partie radialement interne de la bande de roulement en contact avec la surface externe de la ceinture de renfort sommet (13) sur laquelle circule la première extrémité du brin de fil conducteur (21), dans lequel ladite première extrémité libre (21) du brin de fil conducteur de l'électricité (20) est disposée de telle sorte qu'elle soit en contact avec lesdits moyens (12) de conduction de l'électricité disposés sur la face radialement interne de la bande de roulement.

7. Pneumatique (1) selon l'une des revendications 1 à 6, comprenant en outre :
- une zone talon, comprenant des anneaux de renfort des bourrelets (160, 161) et, des gommes de protection talon (170, 171) destinées à être en contact avec la jante d'une roue, lesdites gommes de protection talon (170, 171) étant formées à partir d'un mélange caoutchouteux conducteur de l'électricité,
- une nappe de renfort carcasse (15) ancrée par ses extrémités radialement internes sur les anneaux de renfort des talons (160, 161), comprenant des moyens pour assurer la conduction de l'électricité depuis la surface radialement externe de ladite nappe de renfort carcasse (15) jusqu'aux gommes de protection talon (170, 171) , ladite nappe de renfort carcasse étant en son centre en contact avec la face radialement interne de ladite ceinture de renfort sommet, et dans lequel, la seconde extrémité libre (22) du brin de fil conducteur de l'électricité (20) est placée de telle sorte qu'elle soit en contact avec la surface radialement externe de la nappe de renfort carcasse (15).

8. Procédé de fabrication d'un pneumatique selon l'une des revendications 1 à 7 comprenant les étapes au cours desquelles :
A- on dépose une ou plusieurs nappes de renfort sommet (12, 13) sur une surface de réception (3) rotative autour d'un axe et de forme sensiblement cylindrique ou toroidale, de manière à constituer une ceinture de renfort sommet,
B- on approche d'une première face radiale (F1) de la surface de réception la pointe (41) d'une aiguille creuse (40) dans laquelle circule un fil conducteur de l'électricité, et de laquelle a été préalablement extrait une amorce (22) de longueur λ, donnée,
C- en passant par un orifice (30) traversant la surface de réception (3), on transperce la ceinture sommet de part en part en déplaçant radialement ladite aiguille creuse, depuis la première face radiale (F1) vers une seconde face radiale de la surface de réception (F2), de sorte que ladite amorce (22) soit disposée du coté de ladite seconde face radiale (F2),
D- on retire l'aiguille (40) en effectuant un mouvement de retour dans la direction opposée au mouvement de perçage, tout en faisant circuler le fil à l'intérieur de ladite aiguille, jusqu'à ce que la longueur de fil comprise entre la pointe (41) de l'aiguille creuse et la première face radiale (F1) soit égale à une longueur pré-déterminée,
E- on tranche la portion de fil comprise entre la pointe (41) de l'aiguille creuse (40) et la première face radiale (F1) en activant un moyen de coupe (43) de sorte que les deux extrémités (21, 22) libres du brin de fil conducteur de l'électricité (20) ainsi constitué, soient disposées respectivement radialement de part et d'autre de la ceinture de renfort.

9. Procédé de fabrication d'un pneumatique selon l'une des revendications 1 à 7 comprenant les étapes au cours desquelles :
A' on dépose une ou plusieurs nappes de renfort sommet (12, 13) sur une surface de réception (3) rotative autour d'un axe et de forme sensiblement cylindrique ou toroidale, de manière à constituer une ceinture de renfort sommet
B' on approche d'une première face radiale (F1) de la surface de réception la pointe (41) d'une aiguille creuse (40) dans laquelle circule un fil conducteur de l'électricité, et de laquelle a été préalablement extrait une amorce (22) de longueur λ donnée,
C' en passant par un orifice (30) traversant la surface de réception (3), on transperce la ceinture sommet de part en part en déplaçant radialement ladite aiguille creuse, depuis la première face radiale (F1) vers une seconde face radiale de la surface de réception (F2), de sorte que ladite amorce (22) soit disposée du coté de ladite seconde face radiale (F2),
D' on active un moyen (42) apte à retenir le fil de manière à maintenir l'amorce (22) du coté de ladite seconde face radiale (F2) pendant le mouvement de retour de l'aiguille (40),
E' on retire l'aiguille (40) en effectuant un mouvement de retour dans la direction opposée au mouvement de perçage, tout en faisant circuler le fil à l'intérieur de ladite aiguille, jusqu'à ce que la longueur de fil comprise entre la pointe (41) de l'aiguille creuse et la première face radiale (F1) soit égale à une longueur pré-déterminée,
F' on tranche la portion de fil comprise entre la pointe (41) de l'aiguille creuse (40) et la première face radiale (F1) en activant un moyen de coupe (43) et,
G' on désactive le moyen apte à retenir le fil (42), de manière à libérer l'amorce (22), de sorte que les deux extrémités (21, 22) libres du brin de fil conducteur de l'électricité (20) ainsi constitué, soient disposées respectivement radialement de part et d'autre de la ceinture de renfort.

10. Procédé selon la revendication 8 ou 9 dans lequel, à l'issue de l'étape respectivement D ou E', la longueur de fil prédéterminée de fil comprise entre la pointe (41) de l'aiguille creuse et la première face radiale (F1) est sensiblement égale à deux fois la longueur λ.

11. Procédé selon la revendication 8 ou 9, dans lequel, au cours de l'étape respectivement E ou F', on tranche la portion de fil comprise entre la pointe (41) de l'aiguille creuse (41) et la première face radiale (F1) à une distance de la pointe (41) de l'aiguille creuse (40) sensiblement égale à λ.

12. Procédé selon l'une des revendications 8 à 11 dans lequel la première face radiale (F1) est la face radialement externe de la surface de réception (3), et dans lequel la seconde face radiale (F2) est la face radialement interne de la surface de réception (3).

13. Procédé selon l'une des revendications 8 à 11, dans lequel la première face radiale (F1) est la face radialement interne de la surface de réception (3), et dans lequel la seconde face radiale (F2) est la face radialement externe de la surface de réception (3).

## Claims

1. Tyre (1) comprising a crown reinforcing belt formed of a plurality of reinforcing plies (13, 14) superposed on one another, **characterized in that** each reinforcing ply comprises mutually parallel threads coated in a weakly electrically conducting rubber compound having an electrical resistivity greater than or equal to 10⁸ Ohms/cm, and making a given angle with the said circumferential direction, one strand of electrically conducting thread (20) passes right through the belt in the radial direction, and **in that** a first free end (21) of the said strand runs along the radially external face of the said belt and that the second free end of the said strand (22) runs along the radially internal face of the said reinforcing belt.

2. Tyre according to Claim 1, in which the strand of electrically conducting thread (20) is a textile thread sheathed in an electrically conducting compound having a resistivity of below 10⁶ Ohms/cm.

3. Tyre according to Claim 1, in which the strand of electrically conducting thread (20) is a metal thread sheathed in an electrically conducting compound having a resistivity of below 10⁶ Ohms/cm.

4. Tyre according to one of Claims 1 to 3, in which the strand of electrically conducting thread (20) has a length of between 30 mm and 100 mm.

5. Tyre according to one of Claims 1 to 4, in which the strand of electrically conducting thread (20) is installed in a circumferential region the width of which is substantially equal to half the width of the tyre and which extends symmetrically on each side of the equator of the said tyre.

6. Tyre (1) according to one of Claims 1 to 5, further comprising a tread strip (11) formed of a weakly electrically conducting rubber material (110) having an electrical resistivity greater than or equal to 10⁸ Ohms/cm, in which tread strip there are provided means (111, 12) for conducting the electricity between the exterior surface of the tread strip intended to be in contact with the ground and the radially internal part of the tread strip in contact with the external surface of the crown reinforcing belt (13) over which the first end of the strand of conducting thread (21) runs, in which tyre the said first free end (21) of the strand of electrically conducting thread (20) runs is positioned in such a way that it is in contact with the said electrically conducting means (12) positioned on the radially internal face of the tread strip.

7. Tyre (1) according to one of Claims 1 to 6, further comprising:
- a bead region, comprising bead reinforcing hoops (160, 161) and bead cushions (170, 171) intended to be in contact with the rim of a wheel, the said bead cushions (170, 171) being formed from an electrically conducting rubber compound,
- a carcass reinforcing ply (15) anchored by its radially internal ends to the bead reinforcing hoops (160, 161), comprising means for conducting electricity from the radially external surface of the said carcass reinforcing ply (15) as far as the bead cushions (170, 171), the said carcass reinforcing ply being, at its middle, in contact with the radially internal face of the crown reinforcing belt, and in which tyre the second free end (22) of the strand of electrically conducting thread (20) is positioned in such a way that it is in contact with the radially external surface of the carcass reinforcing ply (15).

8. Method of manufacturing the tyre according to one of Claims 1 to 7, comprising the steps during which:
A - one or more crown reinforcing plies (12, 13) is or are placed on a supporting surface (3) able to rotate about an axis and substantially cylindrical or toroidal in shape, so as to form a crown reinforcing belt,
B - the tip (41) of the hollow needle (40) along the inside of which an electrically conducting thread runs and from which a leader (22) of given length □ has already been extracted is brought closer to a first radial face (F₁), of the supporting surface,
C - by passing through an orifice (30) that passes through the supporting surface (3), the crown belt is pierced right through by moving the said hollow needle radially from the first radial face (F₁) to a second radial face of the supporting surface (F₂) so that the said leader (22) is deposited on the same side as the said second radial face (F₂),
D - the needle (40) is withdrawn by effecting a return movement in the opposite direction to the piercing movement, while at the same time causing the thread to run along inside the said needle until the length of thread comprised between the tip (41) of the hollow needle and the first radial face (F₁) is equal to a predetermined length,
E - the portion of thread comprised between the tip (41) of the hollow needle (40) and the first radial face (F₁) is cut off by activating a cutting means (43) so that the two free ends (21, 22) of the strand of electrically conducting thread (20) thus formed are laid respectively radially on each side of the reinforcing belt.

9. Method of manufacturing the tyre according to one of Claims 1 to 7, comprising the steps during which:
A' - one or more crown reinforcing plies (12, 13) is or are placed on a supporting surface (3) able to rotate about an axis and substantially cylindrical or toroidal in shape, so as to form a crown reinforcing belt,
B' - the tip (41) of the hollow needle (40) along the inside of which an electrically conducting thread runs and from which a leader (22) of given length □ has already been extracted is brought closer to a first radial face (F₁) of the supporting surface,
C' - by passing through an orifice (30) that passes through the supporting surface (3), the crown belt is pierced right through by moving the said hollow needle radially from the first radial face (F₁) to a second radial face of the supporting surface (F₂) so that the said leader (22) is deposited on the same side as the said second radial face (F₂),
D' - a means (42) able to hold the thread is activated so that it holds the leader (22) on the same side as the said second radial face (F₂) during the return movement of the needle (40),
E' - the needle (40) is withdrawn by effecting a return movement in the opposite direction to the piercing movement, while at the same time causing the thread to run along inside the said needle until the length of thread comprised between the tip (41) of the hollow needle and the first radial face (F₁) is equal to a predetermined length,
F' - the portion of thread comprised between the tip (41) of the hollow needle (40) and the first radial face (F₁) is cut off by activating a cutting means (43), and
G' - the means able to hold the thread (42) is deactivated so as to release the leader (22) so that the two free ends (21, 22) of the strand of electrically conducting thread (20) thus formed are laid respectively radially on each side of the reinforcing belt.

10. Method according to Claim 8 or 9 in which, at the end of step D or E' respectively, the predetermined length of thread comprised between the tip (41) of the hollow needle and the first radial face (F₁) is substantially equal to twice the length λ.

11. Method according to Claim 8 or 9 in which, during step E or F' respectively, the portion of thread comprised between the tip (41) of the hollow needle (40) and the first radial face (F₁) is cut off at a distance substantially equal to λ away from the tip (41) of the hollow needle (40).

12. Method according to one of Claims 8 to 11, in which the first radial face (F₁) is the radially external face of the supporting surface (3), and in which the second radial face (F₂) is the radially internal face of the supporting surface (3).

13. Method according to one of Claims 8 to 11, in which the first radial face (F₁) is the radially internal face of the supporting surface (3), and in which the second radial face (F₂) is the radially external face of the supporting surface (3).

## Patentansprüche

1. Luftreifen (1), der einen Scheitelverstärkungsgürtel aufweist, welcher von einer Vielzahl von übereinander angeordneten Verstärkungslagen (13, 14) geformt wird, **dadurch gekennzeichnet, dass** jede Verstärkungslage zueinander parallele, in einer schwach elektrisch leitenden Kautschukmischung mit einem spezifischen Widerstand höher als oder gleich 10⁸ Ohm/cm umhüllte und einen gegebenen Winkel mit der Umfangsrichtung bildende Drähte enthält, wobei ein elektrisch leitender Einzeldraht (20) den Gürtel von einer Seite zur anderen in radialer Richtung durchquert, und dass ein erstes freies Ende (21) des Einzeldrahts auf der radial äußeren Seite des Gürtels umläuft, und dass das zweite freie Ende des Einzeldrahts (22) auf der radial inneren Seite des Verstärkungsgürtels umläuft.

2. Luftreifen nach Anspruch 1, bei dem der elektrisch leitende Einzeldraht (20) ein mit Hilfe einer elektrisch leitenden Mischung umhüllter Textildraht ist, die einen spezifischen Widerstand von weniger als 10⁶ Ohm/cm aufweist.

3. Luftreifen nach Anspruch 1, bei dem der elektrisch leitende Einzeldraht (20) ein mit Hilfe einer elektrisch leitenden Mischung umhüllter Metallfaden ist, die einen spezifischen Widerstand von weniger als 10⁶ Ohm/cm aufweist.

4. Luftreifen nach einem der Ansprüche 1 bis 3, bei dem der elektrisch leitende Einzeldraht (20) eine Länge zwischen 30mm und 100mm hat.

5. Luftreifen nach einem der Ansprüche 1 bis 4, bei dem der elektrisch leitende Einzeldraht (20) in einer Umfangszone eingesetzt wird, deren Breite im Wesentlichen gleich der halben Breite des Luftreifens ist und sich symmetrisch zu beiden Seiten des Äquators des Luftreifens erstreckt.

6. Luftreifen (1) nach einem der Ansprüche 1 bis 5, der weiter einen Laufstreifen (11) enthält, der aus einem schwach elektrisch leitenden Kautschukmaterial (110) geformt ist, das einen spezifischen elektrischen Widerstand größer als oder gleich 10⁸ Ohm/cm aufweist, in dem Einrichtungen (111, 12) vorgesehen sind, um die Leitung der Elektrizität zwischen der Außenfläche des Laufstreifens, die dazu bestimmt ist, mit dem Boden in Kontakt zu sein, und dem radial inneren Bereich des Laufstreifens in Kontakt mit der Außenfläche des Scheitelverstärkungsgürtels (13) zu gewährleisten, auf der das erste Ende (21) des leitenden Einzeldrahts umläuft, bei dem das erste freie Ende (21) des elektrisch leitenden Einzeldrahts (20) so angeordnet ist, dass es mit den Elektrizität leitenden Einrichtungen (12) in Kontakt ist, die auf der radial inneren Seite des Laufstreifens angeordnet sind.

7. Luftreifen (1) nach einem der Ansprüche 1 bis 6, der weiter enthält:
- eine Wulstzone, die Verstärkungsringe der Wülste (160, 161) und Wulstschutzgummis (170, 171) enthält, die dazu bestimmt sind, mit der Felge eines Rads in Kontakt zu sein, wobei die Wulstschutzgummis (170, 171) ausgehend von einer elektrisch leitenden Kautschukmischung geformt werden,
- eine Karkassenverstärkungslage (15), die durch ihre radial inneren Enden auf den Verstärkungsringen der Wülste (160, 161) verankert ist, die Einrichtungen enthält, um die Leitung der Elektrizität von der radial äußeren Fläche der Karkassenverstärkungslage (15) bis zu den Wulstschutzgummis (170, 171) zu gewährleisten, wobei die Karkassenverstärkungslage in ihrer Mitte mit der radial inneren Seite des Scheitelverstärkungsgürtels in Kontakt ist, und bei der das zweite freie Ende (22) des elektrisch leitenden Einzeldrahts (20) so angeordnet ist, dass es mit der radial äußeren Fläche der Karkassenverstärkungslage (15) in Kontakt ist.

8. Verfahren zur Herstellung eines Luftreifens nach einem der Ansprüche 1 bis 7, das die Schritte enthält, während denen:
A- eine oder mehrere Scheitelverstärkungslagen (12, 13) auf eine Aufnahmefläche (3) aufgebracht werden, die um eine Achse drehbar ist und im Wesentlichen eine zylindrische oder toroidale Form hat, um einen Scheitelverstärkungsgürtel zu bilden,
B- an eine erste radiale Seite (F1) der Aufnahmefläche die Spitze (41) einer Hohlnadel (40) angenähert wird, in der ein elektrisch leitenden Draht umläuft, und aus der vorher ein Anfangsstreifen (22) gegebener Länge λ herausgezogen wurde,
C- durch eine die Aufnahmefläche (3) durchquerende Öffnung (30) hindurch der Scheitelgürtel von einer Seite zur anderen durchstochen wird, indem die Hohlnadel radial von der ersten radialen Seite (F1) zu einer zweiten radialen Seite (F2) der Aufnahmefläche verschoben wird, so dass der Anfangsstreifen (22) sich auf der Seite der zweiten radialen Seite (F2) befindet,
D- die Nadel (40) herausgezogen wird, indem eine Rückkehrbewegung in die zur Durchbohrungsrichtung entgegengesetzte Richtung durchgeführt wird, während der Draht im Inneren der Nadel umlaufen gelassen wird, bis die zwischen der Spitze (41) der Hohlnadel und der ersten radialen Seite (F1) enthaltene Drahtlänge gleich einer vorbestimmten Länge ist,
E- der zwischen der Spitze (41) der Hohlnadel (40) und der ersten radialen Seite (F1) enthaltene Drahtabschnitt durch Aktivierung einer Schneideinrichtung (43) abgeschnitten wird, so dass die zwei freien Enden (21, 22) des so gebildeten elektrisch leitenden Einzeldrahts (20) sich radial zu beiden Seiten des Verstärkungsgürtels befinden.

9. Verfahren zur Herstellung eines Luftreifens nach einem der Ansprüche 1 bis 7, das die Schritte enthält, während denen:
A' eine oder mehrere Scheitelverstärkungslagen (12, 13) auf eine Aufnahmefläche (3) aufgebracht werden, die um eine Achse drehbar ist und im Wesentlichen eine zylindrische oder toroidale Form hat, um einen Scheitelverstärkungsgürtel zu bilden,
B' an eine erste radiale Seite (F1) der Aufnahmefläche die Spitze (41) einer Hohlnadel (40) angenähert wird, in der ein elektrisch leitenden Draht umläuft, und aus der vorher ein Anfangsstreifen (22) gegebener Länge λ herausgezogen wurde,
C' durch eine die Aufnahmefläche (3) durchquerende Öffnung (30) hindurch der Scheitelgürtel von einer Seite zur anderen durchstochen wird, indem die Hohlnadel radial von der ersten radialen Seite (F1) zu einer zweiten radialen Seite (F2) der Aufnahmefläche verschoben wird, so dass der Anfangsstreifen (22) sich auf der Seite der zweiten radialen Seite (F2) befindet,
D' eine Einrichtung (42) aktiviert wird, die den Draht so festhalten kann, dass der Anfangsstreifen (22) während der Rückkehrbewegung der Nadel (40) auf der Seite der zweiten radialen Seite (F2) gehalten wird,
E' die Nadel (40) herausgezogen wird, indem eine Rückkehrbewegung in die zur Durchbohrungsrichtung entgegengesetzte Richtung durchgeführt wird, während der Draht im Inneren der Nadel umlaufen gelassen wird, bis die zwischen der Spitze (41) der Hohlnadel und der ersten radialen Seite (F1) enthaltene Drahtlänge gleich einer vorbestimmten Länge ist,
F' der zwischen der Spitze (41) der Hohlnadel (40) und der ersten radialen Seite (F1) enthaltene Drahtabschnitt durch Aktivierung einer Schneideinrichtung (43) abgeschnitten wird, und
G' die Einrichtung, die den Faden (42) festhalten kann, deaktiviert wird, um den Anfangsstreifen (22) freizugeben, damit die zwei freien Enden (21, 22) des so gebildeten elektrisch leitenden Einzeldrahts (20) radial zu beiden Seiten des Verstärkungsgürtels angeordnet sind.

10. Verfahren nach Anspruch 8 oder 9, bei dem nach dem Schritt D bzw. E' die vorbestimmte Drahtlänge, die zwischen der Spitze (41) der Hohlnadel und der ersten radialen Fläche (F1) enthalten ist, im Wesentlichen gleich dem Doppelten der Länge λ ist.

11. Verfahren nach Anspruch 8 oder 9, bei dem während des Schritts E bzw. F' der zwischen der Spitze (41) der Hohlnadel (40) und der ersten radialen Seite (F1) enthaltene Drahtabschnitt in einem Abstand zur Spitze (41) der Hohlnadel (40) im Wesentlichen gleich λ abgeschnitten wird.

12. Verfahren nach einem der Ansprüche 8 bis 11, bei dem die erste radiale Seite (F1) die radial äußere Seite der Aufnahmefläche (3) ist, und bei dem die zweite radiale Seite (F2) die radial innere Seite der Aufnahmefläche (3) ist.

13. Verfahren nach einem der Ansprüche 8 bis 11, bei dem die erste radiale Seite (F1) die radial innere Seite der Aufnahmefläche (3) ist, und bei dem die zweite radiale Seite (F2) die radial äußere Seite der Aufnahmefläche (3) ist.
